# EUROPÄISCHE PATENTSCHRIFT

(11) **EP 0 448 982 B1**
(45) Veröffentlichungstag und Bekanntmachung des Hinweises auf die Patenterteilung: **14.09.1994**
(21) Anmeldenummer: 91103112.8
(22) Anmeldetag: 01.03.1991
(51) Int. Cl.: G01D 5/38, G01B 11/02

(54) **Positionsmesseinrichtung**
Position measuring device
Dispositif de mesure de position

(30) Priorität: 01.03.1990 DE 4006365
(43) Veröffentlichungstag der Anmeldung: 02.10.1991
(73) Patentinhaber: Dr. Johannes Heidenhain GmbH, D-83292 Traunreut (DE)
(72) Erfinder: Huber, Walter, Dipl.-Ing. (FH), W-8220 Traunstein (DE); Spanner, Erwin, Dipl.-Phys., W-8220 Traunstein (DE)

(56) Entgegenhaltungen:
- WO-A-88/05525
- DE-A- 3 702 203
- JP-A- 1 035 737
- JP-A-57 179 811

## Beschreibung

Die Erfindung bezieht sich auf eine Positionsmeßeinrichtung nach dem Oberbegriff des Anspruches 1, basierend auf DE-A-3 702 203.

Derartige Positionsmeßeinrichtungen sind bekannt, beispielsweise aus der DE-A1-37 00 906. Bei diesen bekannten Positionsmeßeinrichtungen wird die translatorische Relativverschiebung senkrecht zur Normalenrichtung der verwendeten Gitter gemessen.

Bei der vorliegenden Erfindung wird hingegen die Relativbewegung in Normalenrichtung des wenigstens einen Beugungsgitters gemessen. Die erfindungsgemäße Vorrichtung ist bevorzugt als Abstandssensor einsetzbar. Obwohl ein Reflektor vorgesehen ist, stellt diese Anordnung kein Michelson-Interferometer dar, denn es fehlt u.a. das bei Interferometern charakteristische Merkmal des Referenzstrahles.

Die Positionsmeßeinrichtung gemäß der Erfindung nimmt gewissermaßen eine Zwitterstellung zwischen Interferometern und interferentiell arbeitenden Gittergebern ein.

Der Erfindung liegt die Aufgabe zugrunde, eine derartige Positionsmeßeinrichtung zu schaffen, die einfach und raumsparend aufzubauen ist, weitgehend unempfindlich gegen Verkippungen und/oder Verdrehung der Bauelemente ist und bei der Translationsbewegungen der Gitter, die nicht die Meßrichtung betreffen, kein Fehlersignal zur Folge haben.

Diese Aufgabe wird von einer Positionsmeßeinrichtung mit den Merkmalen des Anspruches 1 gelöst und gemäß den abhängigen Ansprüchen in vorteilhafter Weise ausgebildet. Anhand von Ausführungsbeispielen soll die Erfindung mit Hilfe der Zeichnungen noch näher erläutert werden.

Es zeigt
- Figur 1A: einen Abstandssensor mit getrenntem Aufspalt- und Vereinigungsgitter;
- Figur 1B: eine Draufsicht auf die Vorrichtung gemäß Figur 1A,
- Figur 2A: einen Abstandssensor mit einem einzigen Aufspalt- bzw. Vereinigungsgitter;
- Figur 2B: eine Draufsicht auf die Vorrichtung gemäß Figur 2A und
- Figur 3: eine Variante in sogenannter Auflichtausführung.

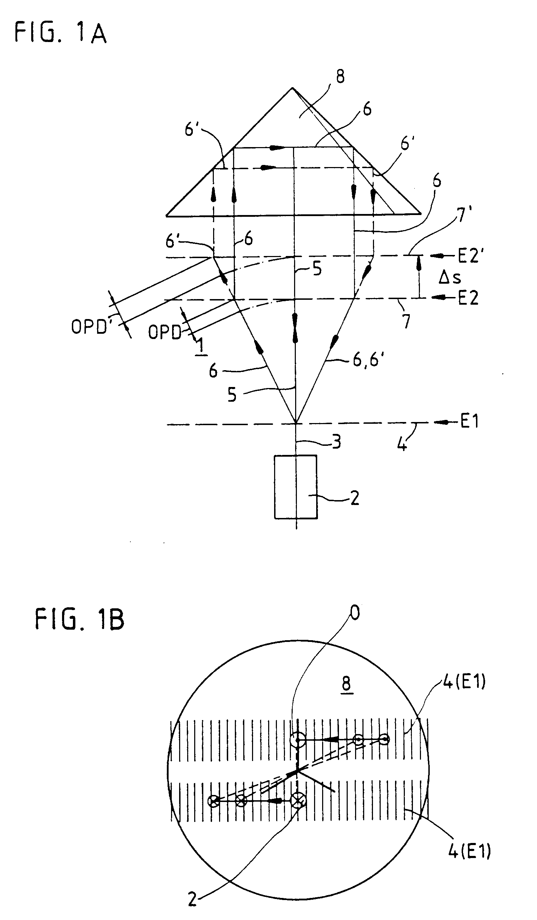

Ein in Figur 1A dargestellter Abstandssensor 1 weist als Beleuchtungseinrichtung einen Laser 2 auf, der einen Beleuchtungsstrahl 3 auf ein Beugungsgitter 4 wirft, das sich in einer Ebene E1 befindet. Von dem Beugungsgitter 4 wird der Beleuchtungsstrahl 3 in zwei Teilstrahlenbündel 5 und 6 aufgespalten, die in unterschiedliche Richtungen laufen. Hier soll angemerkt werden, daß selbstverständlich auch andere optische Elemente zur Aufspaltung des Beleuchtungsstrahles 3 verwendet werden können. Parallel zur Ebene E1 des Aufspaltungsortes, in der sich das Beugungsgitter 4 befindet, liegt in einer Ebene E2 ein weiteres Beugungsgitter 7, an dem die Teilstrahlenbündel 5 und 6 nochmals gebeugt werden. Nach der Umlenkung am Beugungsgitter 7 verlaufen die Teilstrahlenbündel 5 und 6 parallel zueinander, treten in ein Tripelprisma 8 ein, durchlaufen es und treffen als immer noch parallele Teilstrahlenbündel wieder auf das Beugungsgitter 7 in der Ebene E2. Hier werden sie derart gebeugt, daß sie am Beugungsgitter 4 in der Ebene E1 zur Interferenz kommen. Die Teilstrahlenbündel 5 und 6 durchlaufen von der Aufspaltung bis zur Vereinigung unterschiedlich lange optische Wege. Dies nennt man den Gangunterschied OPD, als Kürzel für den international gebräuchlichen Begriff "OPTICAL PATH DIFFERENCE".

Wenn sich der Abstand der Beugungsgitter 4 und 7 in den Ebenen E1 und E2 ändert, ändert sich auch der Gangunterschied OPD der Teilstrahlenbündel 5 und 6. Das heißt, wenn sich die Ebenen E1 und E2 einander nähern, wird der Gangunterschied OPD kleiner, wenn sich der Ebenen-Abstand vergrößert, wird auch der Gangunterschied OPD größer.

In Figur 1A ist dieser Fall derart dargestellt, daß sich das Beugungsgitter 7 in einer Ebene E2' in einer Abstand Δs von der ehemaligen Ebene E2 befindet. Für das Teilstrahlbündel 6' ergibt sich dadurch ein längerer optischer Weg als für das Teilstrahlenbündel 6, wohingegen sich am optischen Weg für das Teilstrahlenbündel 5 nichts ändert. Durch den gestrichelt dargestellten Verlauf des Strahlenganges 6' wird dies anschaulich.

Eine Relativbewegung in Normalenrichtung der beiden Beugungsgitter 4 und 7 hat eine direkt zu deren Abstandsänderung Δs proportionale Gangunterschiedsdifferenz ΔOPD der interferierenden Teilstrahlenbündel 5 und 6 zur Folge, was als Hell- Dunkelmodulation von einer Detektoreinrichtung detektiert werden kann. Die Detektoreinrichtung liegt hier räumlich hinter dem Laser 2 und ist nicht dargestellt.

In Figur 1B ist eine schematische Draufsicht gezeigt, die für sich spricht. Es ist angedeutet, daß das Beugungsgitter 4 nicht unbedingt aus einem einzigen Gitter bestehen muß. Die gezeigten Teilgitter müssen auch nicht unbedingt in einer gemeinsamen Ebene E1 liegen. Auch Stufen sind möglich, diese Ausführungen müßten dann bei der Auslegung der Beugungsgitter berücksichtigt werden. Gleiches gilt auch für das zweite Beugungsgitter 7.

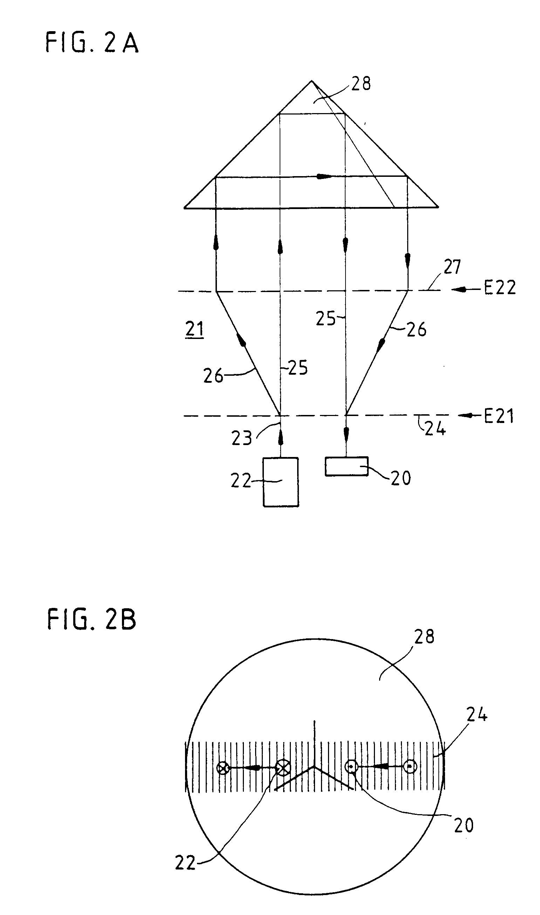

Die Figuren 2A, 2B zeigen eine Variante des Abstandssensors 1 aus Figur 1, der hier das Bezugszeichen 21 entsprechend der Figurenbezifferung 2 trägt.

Ein Laser 22 richtet einen Beleuchtungsstrahl 23 auf ein Beugungsgitter 24, an dem die Teilstrahlenbündel 25 und 26 erzeugt werden, die auf ein zweites Beugungsgitter 27 gerichtet sind, welches vom Beugungsgitter 24 parallel beabstandet ist. Durch die Beugungsgitter 24 und 27 werden zwei parallele Ebenen E21 und E22 definiert, die einen bestimmten Abstand voneinander haben.

Am Beugungsgitter 27 werden die Teilstrahlenbündel 25 und 26 durch erneute Beugung parallel zueinander ausgerichtet, durchlaufen parallel zueinander ein retroreflektierendes Element (Tripelprisma 28) und treffen wieder auf das Beugungsgitter 27, von dem sie durch nochmalige Beugung so auf das Beugungsgitter 24 gerichtet werden, daß sie interferieren können.

Ein Detektor 20 detektiert die Hell- Dunkelmodulation, die bei den interferierenden Teilstrahlenbündeln 25 und 26 aufgrund von Gangunterschiedsdifferenzen auftritt, wie bereits zu Figur 1 erläutert wurde.

Aus Figur 2B ist ersichtlich, daß zur Realisierung der Messvorrichtung 21 in der Ebene E1 für die Aufspaltung und Vereinigung auch ein einzelnes Beugungsgitter 24 als Beugungselement ausreichend ist. Wenn also kein Parallelversatz für Beleuchtung und Detektor erforderlich oder gewünscht ist, kann das retroreflektierende Element 28 auf ein 90°-Prisma reduziert werden, welches ja in einer Ebene retroreflektierende Eigenschaften aufweist, hier aber nicht dargestellt ist.

Abweichend von den gezeigten Durchlicht-Ausführungsbeispielen ist die Erfindung auch bei Auflichtgeräten realisierbar, was eine geänderte geometrische Anordnung der Bauelemente erfordert.

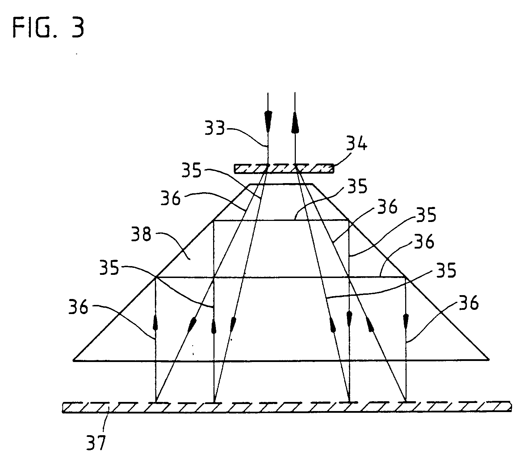

Diese Variante ist in Figur 3 in Analogie zu den bereits beschriebenen gezeigt. Entsprechenden Bauelementen ist auch hier wieder der Figurenindex voran gestellt.

Von einer Lichtquelle kommend wird ein Beleuchtungsstrahl 33 von einem Beugungsgitter 34 in Teilstrahlenbündel 35 und 36 aufgespalten, die in unterschiedliche Richtungen laufen.

Das Besondere an diesem Ausführungsbeispiel ist ein Tripelprisma 38, welches sich zwischen den Beugungsgittern 34 und 37 befindet. Bei diesem Tripelprisma 38 ist die Spitze entfernt, und die Teilstrahlenbündel 35 und 36 treten - nicht wie üblich an der Basis, sondern - an der der Basis gegenüberliegenden Fläche ein, die durch die Kappung der Spitze entstanden ist.

Ohne Berücksichtigung der unterschiedlichen Brechnungsindizes - die hier, wie auch bei den anderen Ausführungsbeispielen vernachlässigt werden können - durchlaufen die Teilstrahlenbündel 35 und 36 unbeeinflußt das Tripelprisma sozusagen von rückwärts und treffen auf das Beugungsgitter 37, das in diesem Fall als Reflexionsgitter ausgebildet ist. An diesem Reflexionsgitter 37 werden die Teilstrahlenbündel 35 und 36 durch Beugung parallel zueinander ausgerichtet und treten nun, wie bereits bei den vorstehenden Ausführungsbeispielen beschrieben, von der Basis her ins Tripelprisma 38 ein. Sie durchlaufen das Tripelprisma 38 in der schon beschriebenen Weise und treffen als parallele Teilstrahlenbündel 35 und 36 wieder auf das Reflexionsgitter 37. Dort werden sie wieder gebeugt und durch die der Basis des Tripelprismas 38 gegenüberliegende Fläche auf das Beugungsgitter 34 reflektiert. Dort interferieren sie und die Hell- Dunkelmodulation kann detektiert werden.

Abstandsänderungen der beiden Gitter 34 und 37 führen auch in diesem Beispiel wieder zu proportionalen Gangunterschiedsdifferenzen der interferierenden Teilstrahlenbündel 35 und 36, deren Hell-Dunkelmodulation das Abstands- Meßsignal liefert.

Die gewünschte Signalperiode wird bei allen Ausführungsbeispielen durch geeignete Dimensionierung von Lichtwellenlänge und/oder Gitterkonstante eingestellt. Phasenverschobene Signale erzeugt man in bekannter Weise entweder polarisationsoptisch oder durch geeignete Auslegung des Aufspaltgitters als Phasengitter.

## Patentansprüche

1. Optische Meßvorrichtung (1; 21) mit einer Beleuchtungs- (2; 22) und einer Detektoreinrichtung (0; 20) zum Messen des Abstandes zweier Körper mit Hilfe von Lichtstrahlbeugung an wenigstens einer Gitterteilung (7; 27; 37), bei der mittels wenigstens einem optischen Element (4; 24; 34) ein Beleuchtungsstrahl (3; 23; 33) in Teilstrahlenbündel (5, 6; 25, 26; 35, 36) aufgespalten wird, die in unterschiedliche Richtungen laufen, dadurch gekennzeichnet, daß in einer Ebene (E2; E22), die parallel zur Ebene (E1; E21) des Aufspaltortes liegt, das Beugungsgitter (7; 27; 37) vorhanden ist, an dem die Teilstrahlenbündel (5, 6; 25, 26; 35, 36) so gebeugt werden, daß sie parallel zueinander ausgerichtet sind, als parallele Teilstrahlenbündel (5, 6; 25, 26; 35, 36) ein retroreflektierendes Element (8; 28; 38) durchlaufen und wieder auf das Beugungsgitter (7, 27; 37) auftreffen, um erneut gebeugt und einem optischen Element (4; 24; 34) in der Ebene (E1) zugeführt zu werden, wo sie zur Interferenz kommen, und daß bei Abstandsänderung (Δs) der beiden Ebenen (E1; E21 und E2; E22) bei den interferierenden Teilstrahlenbündeln (5, 6; 25, 26; 35, 36) eine Gangunterschiedsdifferenz (DOPD) auftritt, die der Abstandsänderung (Δs) direkt proportional ist und als Hell-Dunkelmodulation von der Detektoreinrichtung (0; 20) detektiert wird.

2. Optische Meßvorrichtung nach Anspruch 1, dadurch gekennzeichnet, daß das optische Aufspaltelement ein Beugungsgitter, vorzugsweise ein Phasengitter (4; 24; 34) ist.

3. Optische Meßvorrichtung nach Anspruch 1, dadurch gekennzeichnet, daß das retroreflektierende Element ein 90°-Prisma, vorzugsweise ein Tripelprisma (8; 28; 38) ist.

4. Optische Meßvorrichtung nach Anspruch 3, dadurch gekennzeichnet, daß das Tripelprisma (8; 28) den Beugungsgittern (4, 7; 24, 27) nachgeordnet ist.

5. Optische Meßvorrichtung nach Anspruch 3, dadurch gekennzeichnet, daß das Tripelprisma (38) zwischen den Beugungsgittern (34, 37) angeordnet ist.

6. Optische Meßvorrichtung nach Anspruch 5, dadurch gekennzeichnet, daß die Spitze des Tripelprismas (38) entfernt ist.

7. Optische Meßvorrichtung nach Anspruch 5, dadurch gekennzeichnet, daß ein Beugungsgitter (37) als Reflexionsgitter ausgebildet ist.

8. Optische Meßvorrichtung nach Anspruch 1 oder Anspruch 2, dadurch gekennzeichnet, daß die Beugungsgitter (4, 7; 24, 27; 34, 37) mehrteilig ausgeführt sind.

## Claims

1. Optical measuring device (1; 21) with a lighting device (2; 22) and a detector device (0; 20) for measuring the distance between two bodies by means of light beam diffraction on at least one grid scale (7; 27; 37), in which by means of at least one optical element (4; 24; 34) a lighting beam (3; 23; 33) is split into partial beams (5, 6; 25, 26; 35, 36) which travel in different directions, characterised in that in a plane (E2; E22) which lies parallel to the plane (E1; E21) of the point of splitting, there is the diffraction grid (7; 27; 37) at which the partial beams (5, 6; 25, 26; 35, 36) are diffracted in such a way that they are oriented parallel to each other, as parallel partial beams (5, 6; 25, 26; 35, 36) pass through a retroreflecting element (8; 28; 38) and impinge on the diffraction grid (7, 27; 37) again, to be diffracted again and delivered to an optical element (4; 24; 34) in the plane (E1) where they interfere, and in that in case of variation (Δs) of the distance between the two planes (E1; E21 and E2; E22), with the interfering partial beams (5, 6; 25, 26; 35, 36) there is an optical path difference (DOPD) which is directly proportional to the variation in distance (Δs) and is detected as light-dark modulation by the detector device (0; 20).

2. Optical measuring device according to claim 1, characterised in that the optical splitting element is a diffraction grid, preferably a phase grid (4; 24; 34).

3. Optical measuring device according to claim 1, characterised in that the retroreflecting element is a 90° prism, preferably a triple prism (8; 28; 38).

4. Optical measuring device according to claim 3, characterised in that the triple prism (8; 28) is arranged behind the diffraction grids (4, 7; 24, 27).

5. Optical measuring device according to claim 3, characterised in that the triple prism (38) is arranged between the diffraction grids (34, 37).

6. Optical measuring device according to claim 5, characterised in that the apex of the triple prism (38) is remote.

7. Optical measuring device according to claim 5, characterised in that a diffraction grid (37) is constructed as a reflection grid.

8. Optical measuring device according to claim 1 or claim 2, characterised in that the diffraction grids (4, 7; 24, 27; 34, 37) are constructed in several parts.

## Revendications

1. Dispositif de mesure optique (1; 21) comportant un dispositif d'éclairage (2; 22) et un dispositif détecteur (0; 20) pour mesurer la distance entre deux corps par diffraction de rayons lumineux sur au moins une graduation à réseau (7; 27; 37), un rayon d'éclairage (3; 23; 33) étant divisé à l'aide d'eu moins un élément optique (4 ; 24; 34) en faisceaux de rayons partiels (5, 6; 25, 26; 35, 36) dont les marches vont dans des directions différentes, caractérisé par le fait que dans un plan (E2; E22) qui est parallèle au plan (E1; E21) du lieu de division se trouve le réseau de diffraction (76; 27; 37) sur lequel les faisceaux de rayons partiels (5, 6; 25, 26; 35, 36) sont diffractés de manière à être orientés parallèllement entre aux, à traverser en tant que faisceaux de rayons partiels parallèles (5, 6; 25, 26; 35, 36) un élément rétroréfléchissant (8; 28; 38) et à revenir sur le réseau de diffraction (7; 27; 37) pour être diffractés de nouveau et être amenés à un élément optique (4; 24; 34) dans le plan (E1) où ils interfèrent, et en cas de variation de distance (Δs) des deux plans (E1; E21 et E2; E22), il se produit, pour les deux faisceaux de rayons partiels (5, 6; 25, 26; 35, 36) un écart de différence de marche (DOPD) qui est directement proportionnel à la variation de distance (Δs) et est détecté en tant que modulation claire-sombre par le dispositif détecteur (0; 20).

2. Dispositif de mesure optique suivant la revendication 1, caractérisé par le fait que l'élément de division optique est un réseau de diffraction, de préférence un réseau de phase (4; 24; 34).

3. Dispositif de mesure optique suivant la revendication 1, caractérisé par le fait que l'élément rétroréfléchissant est un prisme à 90°, de préférence un prisme trièdre (8; 28; 38).

4. Dispositif de mesure optique suivant la revendication 3, caractérisé par le fait que le prisme triplet (8; 28) est disposé derrière les réseaux de diffraction (4, 7; 24, 27).

5. Dispositif de mesure optique suivant la revendication 3, caractérisé par le fait que le prisme triplet (38) est disposé entre les réseaux de diffraction (34, 37).

6. Dispositif de mesure optique suivant la revendication 5, caractérisé par le fait que le pointe du prisme triplet (38) est supprimée.

7. Dispositif de mesure optique suivant la revendication 5, caractérisé par le fait qu'un réseau de diffraction (38) est réalisé sous forme de réseau de réflexion.

8. Dispositif de mesure optique suivant la revendication 1 ou 2, caractérisé par le fait que les réseaux de diffraction (4, 7; 24, 27; 34, 37) sont réalisés en plusieurs parties.
